# EUROPEAN PATENT SPECIFICATION

(11) **EP 1 674 681 B1**
(45) Date of publication and mention of the grant of the patent: **01.07.2015**
(21) Application number: 05112900.5
(22) Date of filing: 23.12.2005
(51) Int. Cl.: F01N 5/02, F01N 3/20, F01N 3/04, F02B 37/00

(54) **METHOD FOR ADJUSTING THE TEMPERATURE OF AN EXHAUST GAS TREATMENT SYSTEM FOR INTERNAL COMBUSTION ENGINES AND ENGINE APPARATUS**
VERFAHREN ZUM REGELN EINER ABGASREINIGUNSSYSTEMTEMPERATUR EINES BRENNKRAFTMASCHINE UND BRENNKRAFTMASCHINE
PROCEDE POUR REGULER LA TEMPERATURE D'UN SYSTÈME POUR LE TRAITEMENT DES GAZ D'ECHAPPEMENT POUR MOTEUR À COMBUSTION INTERNE ET MOTEUR À COMBUSTION INTERNE

(30) Priority: 27.12.2004 IT MI20042513
(43) Date of publication of application: 28.06.2006
(73) Proprietor: FPT Motorenforschung AG, 9320 Arbon (CH)
(72) Inventor: ELLENSOHN, Rudolf, 9434, AU (SG) (CH); GSTREIN, Wolfgang, 9320, ARBON (CH)
(74) Representative: Franzolin, Luigi

(56) References cited:
- WO-A1-94/28298
- DE-A1- 4 340 463
- DE-A1- 10 039 575
- DE-A1- 10 228 595

## Description

### SCOPE OF INVENTION

This invention relates to a method for adjusting the temperature of exhaust gases going into a treatment system for the polluting emissions of an internal combustion engine and an engine apparatus provided with an exhaust gas treatment system whereby the temperature of the exhaust gases can be adjusted.

### PRIOR ART

Within the internal combustion engine field, increasingly stricter limits on polluting emissions have required the adoption of systems for the reduction of the emissions thereof; as different catalytic systems for the reduction of gaseous pollutants such as carbon monoxide, unburnt compounds, nitrous oxides; for instance, in the diesel engine field, particularly for industrial vehicles, catalytic systems known as SCR (Selective Catalytic Reduction) have been proposed; these systems can reduce nitrous oxides with the use of ammonia resulting from a specially fed urea solution. Other catalysts such as oxidation catalysts can be used alone or in combination with such systems. Furthermore, traps for different types of particulate are frequently used. An exhaust gas current purifies these systems.

A common feature of these systems lies in the need to operate in a specific temperature range. Catalytic systems are ineffective below a given temperature, whereas excessively high temperatures may damage the catalyst irreversibly: for example, SCR systems are active above 200 °C and can be damaged by temperatures exceeding 560-600 °C. Particulate traps also have, depending on the type used, maximum operating temperatures. Furthermore, their reprocessing, by combustion of the trapped particulate, may occur only with adequate temperatures.

Inadequate temperature conditions may occur very frequently during normal operation of a vehicle engine, for example when running at low speed. Therefore, the reduction of pollution achieved with catalytic systems is often unsatisfactory.

Moreover, the need to not exceed certain exhaust gas temperatures may result in power limitations resulting from the engine in fully loaded operating conditions. Thus it shall be necessary to guarantee, when exhaust gas treatment systems are present, adequate exhaust gas temperatures, preferably without altering the consumption of energy for the worse.

An example of known systems is given through DE 100 39 575, whose features are in the preamble of claim 1 or 6.

### SUMMARY

The above-mentioned problems have now been solved by a method for adjusting the temperature of an exhaust gas treatment system located on the gas exhaust line of an internal combustion engine, according to claim 1

The method includes the generation of mechanical power achieved by the steam produced, preferably in a special steam engine.

The invention also relates to an engine apparatus used for accomplishing the method according to the present invention.

A particularly interesting part of the invention is given in the attached claims.

### LIST OF FIGURES

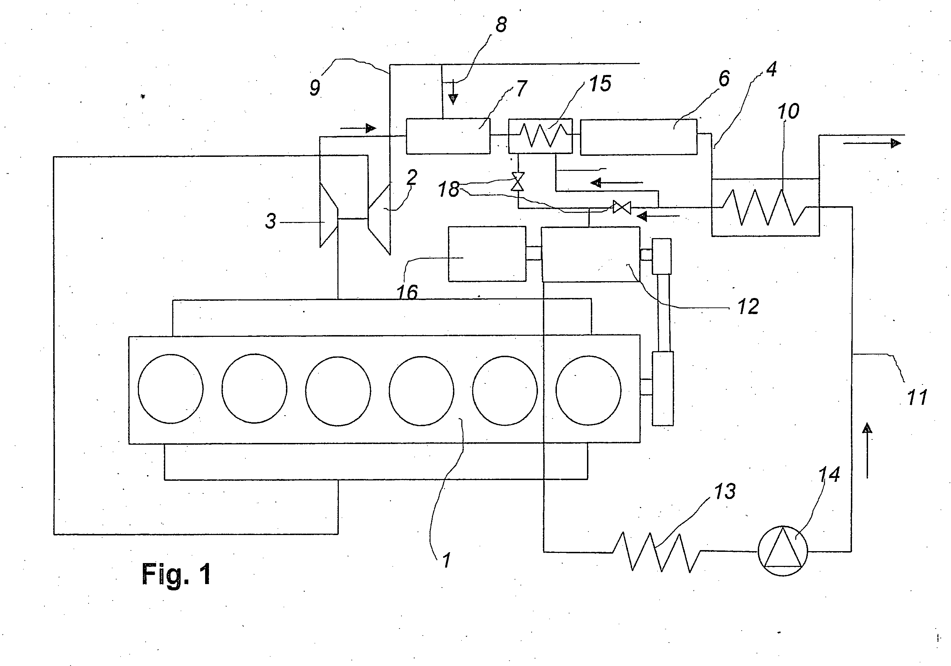

This invention will now be described by a detailed description of preferred but not exclusive embodiments, given only as an example, with the aid of the enclosed figure 1 which schematically shows a diagram of an engine apparatus based on the present invention.

### DETAILED DESCRIPTION OF AN EMBODIMENT

With reference to figure 1, the diagram of an engine apparatus is shown according to the present invention. It includes engine 1. It may refer to a common combustion engine, e.g. a Diesel engine, suitable for motor propulsion, particularly for industrial vehicles. The engine, according to a possible embodiment, may be supercharged by means of a supercharging unit comprising a turbocompressor 2, located on the suction line 5 and operated by the turbine 3 located on the exhaust gas line 4.

On the exhaust gas line 4, there is an exhaust gas treatment system 6, which may be of the known type; it can be a catalytic system able to reduce pollutants present in exhaust gases resulting from the engine, e.g. by reaction with constituents present in the exhaust gases thereof, such as unburnt oxygen, or others specially fed, such as ammonia, or in another known manner.

The treatment system may also be a particulate trap or comprise several different devices. Gases resulting from the engine 1 flow through the line 4 and go through the system 6. According to an aspect of the invention, a burner 7 is installed on the line 4, which is supplied with fuel, being preferably the one used for the engine 1, e.g. diesel fuel. It can be supplied with air, in addition to the unburnt air present in the exhaust gases of the engine, for example suitably coming through the duct 8 from the engine suction line 9. According to the size of the components and of the pipelines thereof, to achieve adequate rates, there may be rate inductor and pressure difference systems such as Venturi pipes and/or ejector nozzles suitably installed for the specific purpose. The burner heats the exhaust gases before going into the treatment system in order to keep it at a proper operating temperature. According to the invention, burner combustion gases are mixed with the exhaust gases of the engine 1; combustion takes place directly in the exhaust gases, thus it all goes through the treatment system 6. The heat recuperator 10 is located downstream of the treatment system; the recuperator may be a heat exchanger, where heat is transferred to a fluid; it is a steam generator in which the heat transferred from the gases is used to generate steam from the water circulating in a special circuit 11. The steam generated can be used to operate the steam engine 12. Said engine can be used for different purposes, e.g. to provide the internal combustion engine 1 with torque or to operate an electric generator 16. It may also be used for both operations; when generating more torque than needed for the traction, the generator may be the same that is also operated by the internal combustion engine 1. The water circuit 11 for the steam engine may comprise other elements necessary for its operation such as the pump 14 and the condenser 13, which can be cooled with air or water in an known manner.

According to another aspect of the invention, the method consists in cooling the exhaust gases before going into the system 6 when the engine operating conditions determine an excessively high temperature of the exhaust gases. To this end, the heat exchanger 15 may be required. It can be placed on the exhaust line 4, between the engine 1 and the system 6, and can be used to transfer heat to the water (even in the state of steam) of the circuit 11, preferably to overheat the steam produced in the generator 10. For example, it can be placed on an additional circuit 17, which can be suitably inserted in the circuit 11 or excluded with appropriate means, like the valves 18. The heat exchanger 15 will preferably work alternatively with respect to the burner 7, inasmuch as they have opposite purposes and because they are used in different conditions. If the temperature of the gases produced by the engine 1 is acceptable, they may be both non-operational. However, the heat of the exhaust gases leaving the treatment system 6 can be recovered in the generator 10.

Instead of water, another appropriate vaporisable liquid can be used in the circuit 11, but water is to be preferred.

The invention also relates to an engine apparatus used for vehicles comprising:
an internal combustion engine;
an exhaust line for exhaust gases;
a gas treatment system;
a steam generator placed on the said exhaust line downstream of the said treatment system;
a steam generator that is operated by the steam produced in said generator;
a burner placed on the said exhaust line between the engine and the treatment system.

According to another aspect, the invention relates to an engine apparatus for vehicles comprising:
an internal combustion engine;
an exhaust line for exhaust gases;
a gas treatment system;
a steam engine placed on the said exhaust line downstream of the said treatment system;
a steam generator that is operated by the steam produced in said generator;
a water circuit connecting the said generator and the said steam engine;
a heat exchanger placed on the said exhaust line upstream of the said treatment system and means for connecting said heat exchanger to said water circuit.

The person skilled in the art may, given the above-mentioned description, implement the invention by also including parts that have not been described and that can be easily achieved with known means. For instance, in order to accomplish the method based on the invention, it is possible to include measuring and control systems to measure the temperature of the exhaust gases and to determine when it is appropriate that the burner 7 or the heat exchanger 15 start operating.

## Claims

1. Method for adjusting the temperature of an exhaust gas treatment system (6) located on the gas exhaust line (4) of an internal combustion engine (1) comprising:
the combustion of fuel in a burner (7) with the production of burnt gases;
the supply of the said burnt gases into the treatment system;
the burnt gases are mixed with the exhaust gases of the internal combustion engine;
production of steam by heat transferred from gases leaving said treatment system;
providing said steam to a steam engine (12);
the method being **characterized in that** said steam engine (12) is used to provide the internal combustion engine (1) with torque and to operate an electric generator (16) when more torque than needed for the traction is generated.

2. Method according to claim 1 whereby the fuel is the same used for the internal combustion engine.

3. Method according to one of the preceding claims 1 or 2 including:
transfer of part of the heat of the exhaust gases leaving the internal combustion engine to the produced steam before the exhaust gases go into the said treatment system.

4. Method according to claim 3 in which the transfer of part of the heat of the exhaust gases leaving the internal combustion engine to the produced steam, before the exhaust gases go into the said treatment system, takes place in a heat exchanger (15) connected to a water circuit (11) connected to a steam generator (10) in which the production of steam takes place.

5. Method according to claim 3 whereby said transfer of heat of the exhaust gases leaving the internal combustion engine before the exhaust gases go into the said treatment system is used to overheat the steam produced in the generator (10).

6. Engine apparatus for vehicles comprising:
an internal combustion engine (1);
an exhaust line (4) for exhaust gases;
a treatment system (6) for exhaust gases;
a steam generator (10) placed on the said exhaust line downstream of the said treatment system;
a steam engine (12) that is operated by the steam produced in said generator;
a burner (7) placed on the said exhaust line between the engine and the treatment system
the engine apparatus being **characterized in that** it comprises a steam engine (12) and an electric generator (16) and **in that** the steam engine (12) provides the internal combustion engine (1) with torque and operates the electric generator (16) when more torque than needed for the traction is generated.

7. Engine apparatus according to claim 6, further comprising:
a water circuit (11) connecting the said generator and the said steam engine;
a heat exchanger (15) placed on the said exhaust line upstream of the said treatment system and means (17, 18) for connecting the said heat exchanger to said water circuit.

8. Engine apparatus according to one of the preceding claim 6 or 7, suitable to overheat the steam produced in the generator (10).

9. Apparatus according to claims from 6 or 7, suitable for accomplishing a method based on any claim 1 to 4.

## Patentansprüche

1. Verfahren zum Einstellen der Temperatur eines Abgasbehandlungssystems (6), das sich in der Abgasleitung (4) einer Brennkraftmaschine (1) befindet, das Folgendes umfasst:
Verbrennen von Kraftstoff in einem Brenner (7) unter Produktion verbrannter Gase;
Zuführen der verbrannten Gase zu dem Behandlungssystem;
Mischen der verbrannten Gase mit den Abgasen der Brennkraftmaschine;
Erzeugen von Dampf durch Wärme, die von das Behandlungssystem verlassenen Gasen übertragen wird; und
Bereitstellen des Dampfes für eine Dampfmaschine (12);
wobei das Verfahren **dadurch gekennzeichnet ist, dass** die Dampfmaschine (12) verwendet wird, um für die Brennkraftmaschine (1) Drehmoment bereitzustellen und um einen elektrischen Generator (16) zu betreiben, wenn mehr Drehmoment als für die Traktion erforderlich erzeugt wird.

2. Verfahren nach Anspruch 1, wobei der Kraftstoff gleich jenem ist, der für die Brennkraftmaschine verwendet wird.

3. Verfahren nach einem der vorhergehenden Ansprüche 1 oder 2, das Folgendes umfasst:
Übertragen eines Teils der Wärme der die Brennkraftmaschine verlassenden Abgase an den erzeugten Dampf, bevor sich die Abgase in das Behandlungssystem bewegen.

4. Verfahren nach Anspruch 3, wobei die Übertragung eines Teils der Wärme der die Brennkraftmaschine verlassenden Abgase an den erzeugten Dampf, bevor sich die Abgase in das Behandlungssystem bewegen, in einem Wärmetauscher (15) erfolgt, der mit einem Wasserkreislauf (11) verbunden ist, der mit einem Dampfgenerator (10) verbunden ist, in dem die Erzeugung von Dampf stattfindet.

5. Verfahren nach Anspruch 3, wobei die Übertragung von Wärme der die Brennkraftmaschine verlassenden Abgase, bevor sich die Abgase in das Behandlungssystem bewegen, verwendet wird, um den im Generator (10) erzeugten Dampf zu überhitzen.

6. Kraftmaschinenvoruchtung für Fahrzeuge, die Folgendes umfasst:
eine Brennkraftmaschine (1);
eine Abgasleitung (4) für Abgase;
ein Behandlungssystem (6) für Abgase;
einen Dampfgenerator (10), der in der Abgasleitung stromabseitig des Behandlungssystems angeordnet ist;
eine Dampfmaschine (12), die durch den im Generator erzeugten Dampf betrieben wird;
einen Brenner (7), der in der Abgasleitung zwischen der Maschine und dem Behandlungssystem angeordnet ist;
wobei die Brennkraftmaschinenvorrichtung **dadurch gekennzeichnet ist, dass** sie eine Dampfmaschine (12) und einen elektrischen Generator (16) umfasst und dass die Dampfmaschine (12) die Brennkraftmaschine (1) mit Drehmoment versorgt und den elektrischen Generator (16) betreibt, wenn mehr Drehmoment als für die Traktion erforderlich erzeugt wird.

7. Kraftmaschinenvorrichtung nach Anspruch 6, die ferner Folgendes umfasst:
einen Wasserkreislauf (11), der den Generator und die Dampfmaschine verbindet;
einen Wärmetauscher (15), der in der Abgasleitung stromaufseitig des Behandlungssystems angeordnet ist, und Mittel (17, 18) zum Verbinden des Wärmetauschers mit dem Wasserkreislauf.

8. Kraftmaschinenvorrichtung nach einem der vorhergehenden Ansprüche 6 oder 7, die geeignet ist, den im Generator (10) erzeugten Dampf zu überhitzen.

9. Vorrichtung nach den Ansprüchen 6 oder 7, die geeignet ist, ein Verfahren nach einem der Ansprüche 1 bis 4 auszuführen.

## Revendications

1. Procédé pour réguler la température d'un système de traitement des gaz d'échappement (6) positionné sur la conduite d'échappement de gaz (4) d'un moteur à combustion interne (1) comprenant :
la combustion de combustible dans un brûleur (7) avec la production de gaz brûlés ;
l'amenée desdits gaz brûlés dans le système de traitement ;
les gaz brûlés sont mélangés avec les gaz d'échappement du moteur à combustion interne ;
la production de vapeur par la chaleur transférée des gaz sortant dudit système de traitement ;
fournir ladite vapeur à un moteur à vapeur (12) ;
le procédé étant **caractérisé en ce que** ledit moteur à vapeur (12) est utilisé pour fournir le couple au moteur à combustion interne (1) et pour actionner un générateur électrique (16) lorsque l'on génère plus de couple que nécessaire pour la traction.

2. Procédé selon la revendication 1, moyennant quoi le combustible est le même que celui utilisé pour le moteur à combustion interne.

3. Procédé selon l'une des revendications 1 ou 2, comprenant :
le transfert d'une partie de la chaleur des gaz d'échappement sortant du moteur à combustion interne à la vapeur produite avant que les gaz d'échappement n'aillent dans ledit système de traitement.

4. Procédé selon la revendication 3, dans lequel le transfert d'une partie de la chaleur des gaz d'échappement sortant du moteur à combustion interne à la vapeur produite, avant que les gaz d'échappement n'aillent dans ledit système de traitement, a lieu dans un échangeur de chaleur (15) raccordé à un circuit de vapeur (11) raccordé à un générateur de vapeur (10) dans lequel la production de vapeur a lieu.

5. Procédé selon la revendication 3, moyennant quoi ledit transfert de chaleur des gaz d'échappement sortant du moteur à combustion interne avant que les gaz d'échappement n'aillent dans ledit système de traitement, est utilisé pour surchauffer la vapeur produite dans le générateur (10).

6. Appareil formant moteur pour véhicules, comprenant :
un moteur à combustion interne (1) ;
une conduite d'échappement (4) pour les gaz d'échappement ;
un système de traitement (6) pour les gaz d'échappement ;
un générateur de vapeur (10) placé sur ladite conduite d'échappement en aval dudit système de traitement ;
un moteur à vapeur (12) qui est actionné par la vapeur produite dans ledit générateur ;
un brûleur (7) placé sur ladite conduite d'échappement entre le moteur et le système de traitement ;
l'appareil formant moteur étant **caractérisé en ce qu'**il comprend un moteur à vapeur (12) et un générateur électrique (16) et **en ce que** le moteur à vapeur (12) fournit le couple au moteur à combustion interne (1) et actionne le générateur électrique (16) lorsque l'on génère plus de couple que nécessaire pour la traction.

7. Appareil formant moteur selon la revendication 6, comprenant en outre :
un circuit d'eau (11) raccordant ledit générateur et ledit moteur à vapeur ;
un échangeur de chaleur (15) placé sur ladite conduite d'échappement en amont dudit système de traitement et des moyens (17, 18) pour raccorder ledit échangeur de chaleur audit circuit d'eau.

8. Appareil formant moteur selon l'une des revendications 6 ou 7, approprié pour surchauffer la vapeur produite dans le générateur (10).

9. Appareil selon les revendications 6 ou 7, approprié pour réaliser un procédé selon les revendications 1 à 4.
